# EUROPEAN PATENT SPECIFICATION

(11) **EP 3 823 115 B1**
(45) Date of publication and mention of the grant of the patent: **29.06.2022**
(21) Application number: 20801137.9
(22) Date of filing: 07.08.2020
(51) Int. Cl.: H02B 13/075, H02H 9/06

(54) **GAS-INSULATED METAL ENCLOSED NEUTRAL POINT COMPLETE-SET DEVICE**
GASISOLIERTE METALLGEKAPSELTE NEUTRALPUNKT KOMPLETTSET VORRICHTUNG
ENSEMBLE COMPLET DE POINT NEUTRE ENFERMÉ DANS UN ENVELOPPE MÉTALIQUE À ISOLATION GAZEUSE

(30) Priority: 18.09.2019 CN 201910883418
(43) Date of publication of application: 19.05.2021
(73) Proprietor: STATE GRID ZHEJIANG ECONOMIC RESEARCH INSTITUTE, Hangzhou, Zhejiang 310008 (CN); STATE GRID WENZHOU ELECTRIC POWER SUPPLY COMPANY, Wenzhou, Zhejiang 325000 (CN); HENAN PINGGAO ELECTRIC CO., LTD., Pingdingshan, Henan 467000 (CN)
(72) Inventor: GAO, Meijin, Hangzhou, Zhejiang 310008 (CN); WANG, Tingting, Hangzhou, Zhejiang 310008 (CN); LIU, Weijun, Hangzhou, Zhejiang 310008 (CN); YANG, Jianhua, Hangzhou, Zhejiang 310008 (CN); HUANG, Jiangqian, Hangzhou, Zhejiang 310008 (CN); ZHOU, Huiwen, Hangzhou, Zhejiang 310008 (CN); LI, Chu, Wenzhou, Zhejiang 325000 (CN); LI, Jianyu, Hangzhou, Zhejiang 310008 (CN); DI, Qian, Pingdingshan, Henan 467000 (CN); YIN, Junhua, Pingdingshan, Henan 467000 (CN); KANG, Xuejing, Pingdingshan, Henan 467000 (CN); JIA, Fangli, Pingdingshan, Henan 467000 (CN); LI, Yanhua, Pingdingshan, Henan 467000 (CN); XIE, Xiaolei, Pingdingshan, Henan 467000 (CN)
(74) Representative: Meyer, Thorsten
(86) International application number: PCT/CN2020/107593
(87) International publication number: WO 2021/052053

(56) References cited:
- WO-A1-2017/021106
- CN-A- 105 070 577
- CN-A- 108 512 107
- CN-A- 108 512 107
- CN-A- 110 752 536
- CN-U- 205 029 338
- US-A- 2 293 319

## Description

### FIELD OF THE INVENTION

The present invention relates to a complete set of gas-insulated and metal-closed neutral point.

### BACKGROUND OF THE INVENTION

The complete set of neutral point device is also called complete set of neutral point protection device for transformer, complete set of neutral point gap protection device, neutral point gap grounding protection device for transformer, gap protector, etc., which are mainly used for overvoltage protection of the neutral point in the power grid system. The complete set of neutral point device can realize two different operation modes in the power system in which the neutral point of the transformer is grounded or ungrounded. This can avoid the damage to the transformer due to the increase in the voltage of the neutral point of the transformer caused by lightning or system failure.

As a typical known complete set of neutral point device, a neutral point gap grounding protection device for transformer is disclosed in the Chinese patent with publication number of CN205389099U and publication date of July 20, 2016. The device includes a base, an isolating switch, an arrester and a discharge gap, etc. The neutral point lead terminal of the transformer is connected to the neutral point of the transformer and then divided into three ways, namely, isolating switch, arrester and discharge gap. This type of complete set of neutral point device has an open structure, with a porcelain casing as the equipment shell and for external insulation. Due to the many exposed parts of the equipment, it is easily affected by the climate and environmental conditions, which is not conducive to the safe and reliable operation of the system.

There are also complete set of neutral point device with a closed structure in the prior art. For example, an AC neutral point GIS complete set that uses SF₆ for insulation is disclosed in Chinese patent application with publication number of CN108512107A and publication date of September 7, 2018. The discharge gap, the isolating switch, and the arrester are provided in the corresponding gas chamber tank, which can avoid pollution, reduce space occupation and increase service life. Similar structure is also disclosed in Chinese patent with the publication number of CN205029338U and publication date of February 10, 2016. Reference document CN108512107A discloses an alternating-current neutral point completed GIS device insulated by using SF6. The device includes a first air chamber tank, a second air chamber tank, a discharge gap tank, a cable terminal tank and a cable line, wherein the cable line is connected to a main grounding net sequentially through a cable incoming terminal, a cable terminal and an isolating switch; the leading-out terminal of the cable terminal is connected to a discharge gap through the cable line; the discharge gap is connected in series with a current mutual transformer through a gap conductive rod, and the other end of the current mutual transformer is connected to the main grounding net; the incoming terminal of the isolating switch is connected with a lightning arrester through the cable line, and the other end of the lightning arrester is connected to the main grounding net; the isolating switch is located in the first air chamber tank; the lightning arrester is located in the second air chamber tank; the discharge gad, the gap conductive rod and the current mutual transformer are located in the discharge gap tank; and the cable terminal is located in the cable terminal tank. Reference document CN205029338U discloses a transformer neutral point gas insulated switchgear. The GIS device includes an isolating switch is equipped with an operating device, a big current transformer, a little current transformer, a discharge gap and an arrester, wherein the discharge gap is connected to one end of the little current transformer, the isolating switch is connected to the other end, one end of the big current transformer is connected to a main transformer through the oil gas excessive sleeve pipe, and the other end is connected with the isolating switch and the arrester. The discharge gap, the isolator and the arrester are grounded through metal casing respectively, and the metal casing is equipped with ground terminal.

However, the existing complete set of closed neutral point equipment needs to be provided with more gas chambers. The structure is more complicated, and the cost is high. In addition, there are many sealing points, which may affect the reliability of the equipment. Meanwhile, the existing complete sets of enclosed neutral point equipment are all grounded at the cable wire inlet end, and the wiring method is relatively simple, which is not suitable for overhead line connection.

### SUMMARY OF THE INVENTION

The purpose of the present invention is to provide a complete set of gas-insulated and metal-closed neutral point device. It can solve the problems that the existing complete set of closed neutral point equipment needs to be equipped with more gas chambers and thus the structure is relatively complicated and the cost is high.

The technical solutions adopted in the present invention are as follows.

A complete set of gas-insulated and metal-enclosed neutral point device, including an arrester, an isolating switch and a discharge gap; the discharge gap includes a neutral point connection side for conducting with the neutral point of the transformer, and a ground side for grounding;

the arrester and the isolating switch are both closed structures arranged vertically, each with a top conductive terminal provided at the top and a ground terminal provided at the bottom;

one of the arrester and the isolating switch is provided with a wire inlet cylinder at the top, the other is provided with an adaptive cylinder, and an intermediate cylinder is provided between the wire inlet cylinder and the adaptive cylinder;

an intermediate conductor is provided in the intermediate cylinder, an adaptive conductor is provided in the adaptive cylinder, and the intermediate conductor is connected through the adaptive conductor to the arrester or the top conductive terminal on the isolating switch;

the neutral point connection side of the discharge gap is fixed on top of the wire inlet cylinder, the ground side of the discharge gap is electrically connected to the adaptive cylinder or is provided with a ground connection end, and the neutral point connection side of the discharge gap and the ground side are exposed to the air;

a branch conductive structure is provided in the wire inlet cylinder, and the branch conductive structure is simultaneously conducting with the arrester under the wire inlet cylinder or the top conductive terminal on the isolating switch, and the corresponding end of the intermediate conductor and a neutral connection side of the arrester;

the wire inlet cylinder is also provided with a wire inlet terminal for conducting with the branch conductive structure, and a wire inlet terminal for conducting with the neutral point of the transformer is provided on the neutral point connection side of the discharge gap.

The beneficial effects are that with the above solution, by providing the wire inlet cylinder, the adaptive cylinder and the intermediate cylinder, the complete set of gas-insulated and metal closed neutral point device can form a closed structure except for the discharge gap. The intermediate conductor and the adaptive conductor can ensure the connection of the arrester and the isolating switch to the neutral point of the transformer, thereby ensuring the safety performance and reducing the space occupation while meeting the functional requirements. At the same time, the arrester and the isolating switch can be used as supporting bases for the neutral point connection side and the ground side of the discharge gap. Compared with the prior art, no separate supporting base for discharge gap is required, nor do more cylinders need to be provided. The structure is simple, which is beneficial to reduce costs.

As a preferred technical solution, an end of the intermediate cylinder close to the wire inlet cylinder is provided with a wire inlet side insulating basin for isolating the intermediate cylinder from the wire inlet cylinder.

The beneficial effects are that the provision of the wire inlet side insulating basin can realize the isolation of the corresponding compartments, improve the reliability, and facilitate the connection and maintenance of the wire inlet wire.

As a preferred technical solution, the branch conductive structure is formed by a cross joint, an end of the cross joint is fixed on the wire inlet side insulating basin, and the other three ends are provided with plug-in conductive structures.

The beneficial effects are that the cross joint has a simple structure and is convenient to fix.

As a preferred technical solution, the cross joint is provided with a blind hole extending along the axial direction of the wire inlet side insulating basin, and the bottom wall of the blind hole is fixed on the wire inlet side insulating basin by screws.

The beneficial effects are that the adoption of the above fixing structure can ensure the reliable fixing of the cross joint, and at the same time facilitate the conduction between the cross joint and the intermediate conductor.

As a preferred technical solution, an end of the intermediate cylinder close to the adaptive cylinder is provided with an adaptive side insulating basin, and the adaptive side insulating basin is used to isolate the intermediate cylinder and the adaptive cylinder.

The beneficial effects are that the provision of an insulating basin on the adaptive side can achieve isolation of the corresponding compartment and improve reliability.

As a preferred technical solution, a switch side insulating basin is provided between the adaptive cylinder and the isolating switch, and the switch side insulating basin is for isolating the adaptive cylinder and the isolating switch.

The beneficial effects are that the provision of the switch side insulating basin can realize the isolation of the corresponding compartment and improve the reliability.

As a preferred technical solution, the complete set of gas-insulated and metal-enclosed neutral point device includes a zero-sequence current transducer, and the zero-sequence current transducer is sleeved on the ground side of the discharge gap.

The beneficial effects are that the solution can be used to conveniently realize the fixation of the zero-sequence current transducer, which is convenient for maintenance.

As a preferred technical solution, the wire inlet terminal which is provided on the wire inlet cylinder or on the neutral point connection side of the discharge gap is a neutral point lead terminal provided at the top end of the neutral point connection side of the discharge gap, and the neutral point lead terminal is for conductive connection of the neutral point lead.

The beneficial effects are that provision of the neutral point lead terminal can meet the wiring demand of the overhead line and improve the applicability.

As a preferred technical solution, the wire inlet terminal provided on the wire inlet cylinder is a pluggable cable terminal.

The beneficial effects are that the plug-in cable terminal completely separates the installation of the equipment from the cable system, and the cable terminal head can be directly unplugged during cable testing and maintenance, which is convenient and efficient.

### BRIEF DESCRIPTION OF THE DRAWINGS

Figure 1 is a schematic structural diagram of an embodiment of a complete set of gas-insulated and metal-enclosed neutral point device of the present invention.
Figure 2 is a schematic diagram of the internal structure of the complete set of gas insulated and metal-closed neutral point device of Figure 1.
Figure 3 is a schematic circuit diagram of the complete set of gas-insulated and metal-enclosed neutral point device of Figure 2.
Figure 4 is a partial enlarged view of the branch conductive structure of the complete set of gas-insulated and metal-enclosed neutral point device of Figure 2.
Figure 5 is a partial enlarged view of the adaptive conductor of the complete set of gas-insulated and metal-enclosed neutral point device of Figure 2.
Figure 6 is a schematic diagram of the use state of the complete set of gas-insulated and metal-enclosed neutral point device in Figure 1 using a cable to connect to the neutral point of the transformer.
Figure 7 is a schematic diagram of the use state of the complete set of gas-insulated and metal-enclosed neutral point device in Figure 1 using an overhead line to connect to the neutral point of the transformer.

The names of the components corresponding to the reference signs in the figure are:
1 - base, 2 - arrester, 3 - isolating switch, 4 - wire inlet cylinder, 51 - intermediate cylinder, 52 - intermediate conductor, 61 - adaptive cylinder, 62 - adaptive conductor, 70 - discharge gap, 71 - neutral point connection side, 72 - ground side, 8 - neutral point lead terminal, 91 - wire inlet side insulating basin, 92 - adaptive side insulating basin, 93 - switch side insulating basin, 10 - cross joint, 11 - blind hole, 12 - pluggable cable terminal, 13 - terminal socket, 14 - transformer, 15 - cable, 16 - overhead line, 17 - zero- sequence current transducer.

### DETAILED DESCRIPTION OF THE INVENTION

The present invention will be further described with reference to the accompanying drawings.

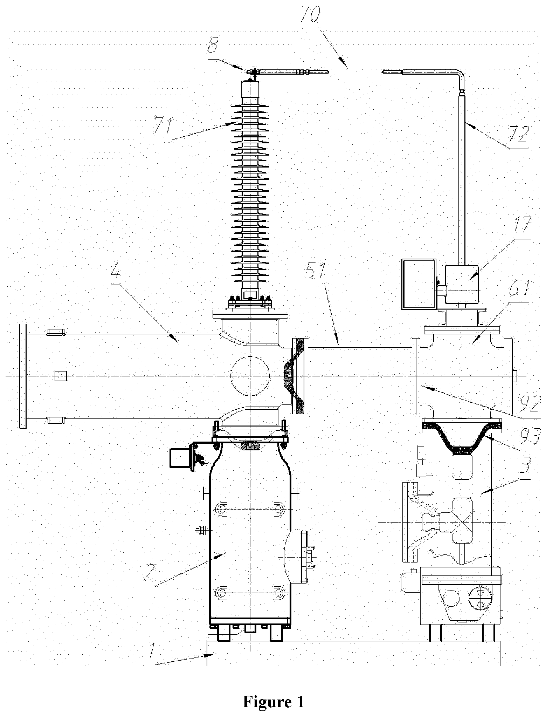

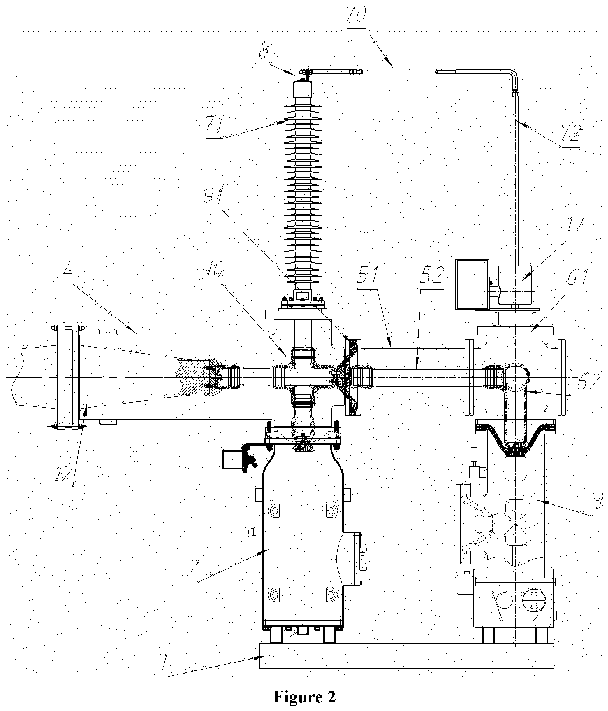

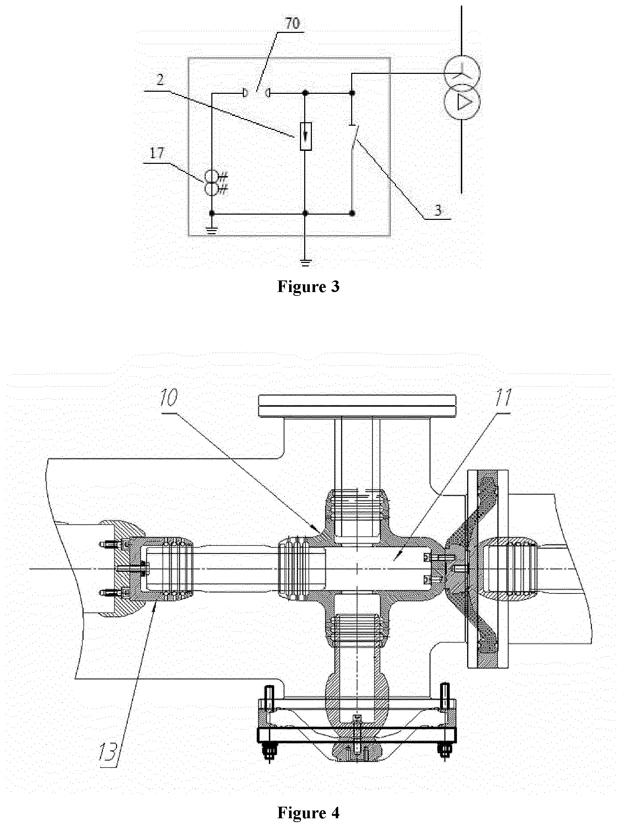

Figures 1 and 2 illustrate an embodiment of the complete set of gas-insulated and metal-enclosed neutral point device of the present invention. The device includes a base 1, a lightning arrester 2, an isolating switch 3, a wire inlet cylinder 4, an intermediate cylinder 51, a rotating cylinder 61 and a discharge gap 70. The arrester 2 and the isolating switch 3 are both closed structures, and both are arranged vertically. Atop conductive terminal is provided on the top of the arrester 2, and a ground terminal is provided on the bottom thereof. A top conductive terminal is provided on the top of the isolating switch 3, and a ground terminal is provided on the bottom thereof. The wire inlet cylinder 4 has a cross-shaped structure and is fixed on the upper end of the arrester 2. The adaptive cylinder 61 has a three-way structure and is fixed on the upper end of the isolating switch 3. The intermediate cylinder 51 is connected between the wire inlet cylinder 4 and the adaptive cylinder 61. As shown in Figures 2 and 3, the arrester 2, the discharge gap 70 and the isolating switch 3 are arranged in parallel. The isolating switch 3 is used to realize the direct grounding and isolation of the neutral point, and can be opened and closed manually or automatically. The arrester 2 and the discharge gap 70 can work normally when the isolating switch 3 is opened.

As shown in Figures 1 and 2, the discharge gap 70 is a rod-shaped gap, and includes a neutral point connection side 71 and a ground side 72. The neutral point connection side 71 and the ground side 72 are both exposed to the air. The neutral point connection side 71 includes an insulating pillar and a discharge rod fixed on the top of the insulating pillar. The top of the insulating pillar is also provided with a neutral point lead terminal 8, which is used for conductive connection of the neutral point lead. The structures of the discharge gap 70 and the neutral point lead terminal 8 are shown in the prior art, and will not be described in detail here. Of course, in other embodiments, the discharge gap 70 may also be a spherical gap. The complete set of gas-insulated and metal-enclosed neutral point device further includes a zero-sequence current transducer 17, which is sleeved on the ground side 72 of the discharge gap 70 for recording the zero-sequence current of the neutral point and the waveform of the discharge current in the discharge gap, so as to facilitate the fault analysis.

As shown in Figures 2 and 4, the end of the intermediate cylinder 51 close to the wire inlet cylinder 4 is provided with a wire inlet side insulating basin 91, which is used to isolate the intermediate cylinder 51 from the wire inlet cylinder 4. A switch side insulating basin 93 is provided between the adaptive cylinder 61 and the isolating switch 3, and the switch-side insulating basin 93 is used to isolate the adaptive cylinder 61 and the isolating switch 3.

The intermediate cylinder 51 is provided with an intermediate conductor 52, and the adaptive cylinder 61 is provided with an adaptive conductor 62. The intermediate conductor 52 is connected to the arrester 2 under the adaptive cylinder 61 or to the top conductive terminal on the isolating switch 3 through the adaptive conductor 62. The intermediate conductor 52 has an in-line structure, and the adaptive conductor 62 has an L-shaped structure. In the direction shown in Figure 2, the left end of the intermediate conductor 52 is plugged into the socket of the intermediate conductor 52 provided on the wire inlet side insulating basin 91, the right end is inserted into the adaptive conductor 62, and the lower end of the adaptive conductor 62 is fixed on the switch side insulating basin 93.

As shown in Figures 2, 4, 5 and 6, a branch conductive structure is provided in the wire inlet cylinder 4, and the branch conductive structure is formed by a cross joint 10. The cross joint 10 is provided with a blind hole 11 extending along an axial direction of the wire inlet side insulating basin 91. The bottom wall of the blind hole 11 is fixed on the wire inlet side insulating basin 91 by screws, and is conducted with the intermediate conductor socket through the conductive insert on the wire inlet side insulating basin 91. The other three ends of the cross joint 10 are provided with plug-in conductive structures. The plug-in conductive structure is a plug hole, which is respectively connected to a pluggable cable terminal 12 provided on the line cylinder 4, the top conductive terminal on the arrester 2 under the line cylinder 4, and the neutral point connection side 71 of the arrester 2. An end of the wire inlet cylinder 4 away from the intermediate cylinder 51 is provided with the pluggable cable terminal 12 for conduction of the neutral point cable 15 with a connector. The other end of the neutral point cable is used to connect to the neutral point of the transformer 14. The inner end of the pluggable cable terminal 12 is provided with a terminal socket 13, and the terminal socket 13 and the socket at the left end of the cross joint 10 are connected through a terminal connecting conductor, thereby realizing the conduction between the neutral point of the transformer 14 and the arrester 2, the discharge gap 70 and the isolating switch 3. Of course, as a conventional technical means in this field, the plug-in conductive structure is conducting with the corresponding plug-in connector through conductive contact fingers.

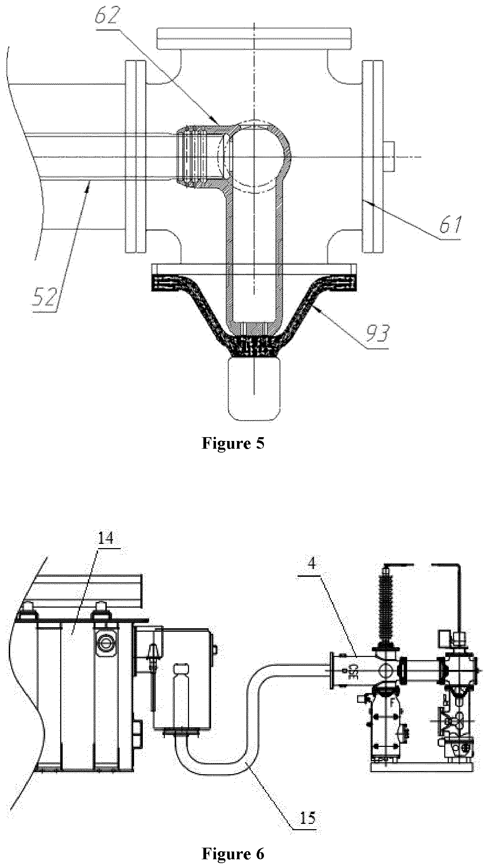

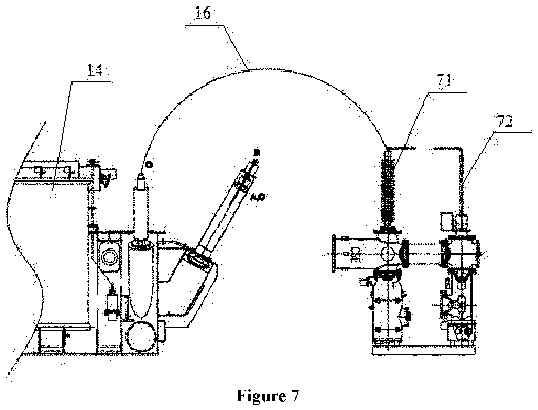

After the complete set of the gas-insulated and metal-enclosed neutral point device is assembled, each of the above cylinders is filled with sulfur hexafluoride gas to achieve insulation. The ground terminals at the bottom of the arrester 2 and the isolating switch 3 are led to the main grounding grid through the base 1 or the grounding bar to realize grounding. The ground side 72 of the discharge gap 70 is led to the main grounding grid through the adaptive cylinder 61, the cylinder of the isolating switch 3, or the grounding bar drawn from the ground connection end to realize grounding. When connected to the transformer 14, as shown in Figure 6, the complete set of gas-insulated and metal-enclosed neutral point device can be connected to the neutral point of the transformer 14 by using a cable 15. Alternatively, as shown in Figure 7, the complete set of gas-insulated and metal-enclosed neutral point device may be connected to the neutral point of the transformer 14 by using an overhead line 16.

During operation, under normal circumstances, the isolating switch 3 is in the off position. When lightning overvoltage and general operating overvoltage invade, the arrester 2 will act to absorb and release the overvoltage, protecting the neutral point insulation of the transformer from damage. In this case, the discharge gap 70 will not be broken down. When transient overvoltage such as ferromagnetic resonance and high-frequency resonance occur in the system, the discharge gap 70 will be broken down and discharge, and the overvoltage will all fall on the gap. The overvoltage energy will be released into the ground, and the neutral point of the transformer will be grounded instantly to prevent the accident from continuing to develop and protect the arrester 2 from thermal collapse accidents. According to needs, the isolating switch 3 can be closed manually or automatically to meet the direct grounding requirements.

In the above-mentioned embodiment, the wire inlet cylinder 4 is provided on the top of the arrester 2, and the adaptive cylinder 61 is provided on the top of the isolating switch 3. In other embodiments, the wire inlet cylinder 4 may also be provided on the isolating switch 3, and the adaptive cylinder 61 can be provided on the top of the arrester 2.

In the foregoing embodiment, the branch conductive structure is a cross-shaped structure with sockets at three ends. In other embodiments, each connection end of the branch conductive structure may be a screw fixing structure. The inlet wire cylinder 4 is provided with a hand hole for disassembly and assembly operations, which is a common technical means in this field and will not be described in detail here.

In the above-mentioned embodiment, the respective cylinders are provided with corresponding insulating basins to isolate each other. In other embodiments, the cylinders can also be arranged as mutually communicated gas chambers, such as communicating-type insulating basins. For example, an insulated basin equipped with a through valve is used to connect or isolate two adjacent compartments as required. The structures of the above various insulating basins are all shown in the prior art, and will not be described in detail here. In addition, in other embodiments, an adaptive side insulating basin 92 may be provided at an end of the intermediate cylinder 51 close to the adaptive cylinder 61, and the adaptive side insulating basin 92 is used to isolate the intermediate cylinder 51 and the adaptive cylinder 61. At this time, the right end of the intermediate conductor 52 and the left end of the adaptive conductor 62 may both be connected to the conductive insert in the center of the adaptive side insulating basin 92.

In the above-mentioned embodiment, the wire inlet cylinder 4 is provided with a pluggable cable terminal 12 as the wire inlet terminal, and the top end of the neutral point connection side 71 of the discharge gap 70 is provided with a neutral point lead terminal 8. In other embodiments of the present invention, the wire inlet terminal on the wire inlet cylinder 4 may also be a neutral point lead terminal, and the wire inlet terminal may be provided only at the wire inlet cylinder 4, or only on the neutral point connection side 71 of the discharge gap 70. When the wire inlet terminal is provided on the neutral point connection side 71 of the discharge gap 70, the wire inlet cylinder 4 may be a three-way structure, and the branch conductive structure may be a three-way joint.

In the above embodiment, the zero-sequence current transducer is sleeved on the ground side of the discharge gap. In other implementations, the zero-sequence current transducer can also take other forms. For example, it can be provided on the neutral point connection side.

Finally, it should be noted that the above descriptions are only preferred embodiments of the present invention and are not intended to limit the present invention. Any modification, equivalent replacement, improvement, etc., made within the scope of the claims should be included in the protection scope of the present invention.

## Claims

1. A complete set of gas-insulated and metal-enclosed neutral point device, comprising an arrester (2), an isolating switch (3) and a discharge gap (70); the discharge gap (70) comprises a neutral point connection side (71) for conducting with a neutral point of a transformer (14), and a ground side (72) for grounding; wherein:
the arrester (2) and the isolating switch (3) are both closed structures each with a top conductive terminal provided at a top and a ground terminal provided at a bottom;
one of the arrester (2) and the isolating switch (3) is provided with a wire inlet cylinder (4) at the top, the other is provided with an adaptive cylinder (61), and an intermediate cylinder (51) is provided between the wire inlet cylinder (4) and the adaptive cylinder (61);
an intermediate conductor (52) is provided in the intermediate cylinder (51), an adaptive conductor (62) is provided in the adaptive cylinder (61), and the intermediate conductor (52) is connected through the adaptive conductor (62) to the arrester (2) or to a top conductive terminal on the isolating switch (3);
wherein the neutral point connection side (71) of the discharge gap (70) is fixed on top of the wire inlet cylinder (4), the ground side (72) of the discharge gap (70) is electrically connected to the adaptive cylinder (61) or is provided with a ground connection end,
a branch conductive structure is provided in the wire inlet cylinder (4), and the branch conductive structure is simultaneously conducting with the arrester (2) under the wire inlet cylinder (4) or the top conductive terminal on the isolating switch (3), and a corresponding end of the intermediate conductor (52) and a neutral connection side of the arrester (2);
**characterized in that** the wire inlet cylinder (4) is also provided with a wire inlet terminal for conducting with the branch conductive structure, and a wire inlet terminal for conducting with the neutral point of the transformer (14) is provided on the neutral point connection side (71) of the discharge gap (70), the arrester (2) and the isolating switch (3) are arranged vertically, and the neutral point connection side (71) and the ground side (72) of the discharge gap (70) are exposed to the air.

2. The complete set of gas-insulated and metal-enclosed neutral point device of claim 1, wherein an end of the intermediate cylinder (51) close to the wire inlet cylinder (4) is provided with a wire inlet side insulating basin (91) for isolating the intermediate cylinder (51) from the wire inlet cylinder (4).

3. The complete set of gas-insulated and metal-enclosed neutral point device of claim 2, wherein the branch conductive structure is formed by a cross joint (10), an end of the cross joint (10) is fixed on the wire inlet side insulating basin (91), and the other three ends are provided with plug-in conductive structures.

4. The complete set of gas-insulated and metal-enclosed neutral point device of claim 3, wherein the cross joint (10) is provided with a blind hole (11) extending along an axial direction of the wire inlet side insulating basin (91), and a bottom wall of the blind hole (11) is fixed on the wire inlet side insulating basin (91) by screws.

5. The complete set of gas-insulated and metal-enclosed neutral point device of any one of claims 2 to 4, wherein an end of the intermediate cylinder (51) close to the adaptive cylinder (61) is provided with an adaptive side insulating basin (92) for isolating the intermediate cylinder (51) and the adaptive cylinder (61).

6. The complete set of gas-insulated and metal-enclosed neutral point device of any one of claims 2 to 4, wherein a switch side insulating basin (93) is provided between the adaptive cylinder (61) and the isolating switch (3), and the switch side insulating basin (93) is for isolating the adaptive cylinder (61) and the isolating switch (3).

7. The complete set of gas-insulated and metal-enclosed neutral point device of any one of claims 1 to 4, wherein the complete set of gas-insulated and metal-enclosed neutral point device comprises a zero-sequence current transducer (17) sleeved on the ground side (72) of the discharge gap (70).

8. The complete set of gas-insulated and metal-enclosed neutral point device of any one of claims 1 to 4, wherein the wire inlet terminal which is provided on the wire inlet cylinder (4) or on the neutral point connection side (71) of the discharge gap (70) is a neutral point lead terminal (8) provided at a top end of the neutral point connection side (71) of the discharge gap (70), and the neutral point lead terminal (8) is for electrically connection of a neutral point lead.

9. The complete set of gas-insulated and metal-enclosed neutral point device of any one of claims 1 to 4, wherein the wire inlet terminal provided on the wire inlet cylinder (4) is a pluggable cable terminal (12).

## Patentansprüche

1. Vollständige gasisolierte und metallgekapselte Neutralpunktvorrichtungsanordnung, umfassend einen Ableiter (2), einen Trennschalter (3) und eine Entladungsstrecke (70); wobei die Entladungsstrecke (70) eine Neutralpunktverbindungsseite (71) zum leitenden Verbinden mit einem Neutralpunkt eines Transformators (14) und eine Erdungsseite (72) zum Erden umfasst; wobei:
der Ableiter (2) und der Trennschalter (3) beide geschlossenen Strukturen mit jeweils einem oberen leitenden Anschluss, der an einer Oberseite vorgesehen ist, und einem Erdungsanschluss sind, der an einer Unterseite vorgesehen ist;
wobei entweder der Ableiter (2) oder der Trennschalter (3) oben mit einem Drahteinlasszylinder (4) versehen ist, der andere mit einem adaptiven Zylinder (61) versehen ist und ein Zwischenzylinder (51) zwischen dem Drahtleinlasszylinder (4) und dem adaptiven Zylinder (61) vorgesehen ist;
ein Zwischenleiter (52) im Zwischenzylinder (51) vorgesehen ist, ein adaptiver Leiter (62) im adaptiven Zylinder (61) vorgesehen ist und der Zwischenleiter (52) über den adaptiven Leiter (62) mit dem Ableiter (2) oder mit einem oberen leitenden Anschluss auf dem Trennschalter (3) verbunden ist;
wobei die Neutralpunktverbindungsseite (71) der Entladungsstrecke (70) oben auf dem Drahteinlasszylinder (4) fixiert ist, die Erdungsseite (72) der Entladungsstrecke (70) elektrisch mit dem adaptiven Zylinder (61) verbunden ist oder mit einem Erdungsverbindungsende versehen ist, eine Verzweigungsleitungsstruktur im Drahtleinlasszylinder (4) vorgesehen ist und die Verzweigungsleitungsstruktur mit dem Ableiter (2) unter dem Drahteinlasszylinder (4) oder dem oberen leitenden Anschluss auf dem Trennschalter (3) leitend verbunden ist, sowie gleichzeitig mit einem entsprechenden Ende des Zwischenleiters (52) und einer neutralen Verbindungsseite des Ableiters (2) leitend verbunden ist;
**dadurch gekennzeichnet,**
**dass** der Drahteinlasszylinder (4) auch mit einem Drahteinlassanschluss zum leitenden Verbinden mit der Verzweigungsleitungsstruktur versehen ist und ein Drahteinlassanschluss zum leitenden Verbinden mit dem Neutralpunkt des Transformators (14) auf der Neutralpunktverbindungsseite (71) der Entladungsstrecke (70) vorgesehen ist, der Ableiter (2) und der Trennschalter (3) vertikal angeordnet sind und die Neutralpunktverbindungsseite (71) und die Erdungsseite (72) der Entladungsstrecke (70) der Luft ausgesetzt sind.

2. Vollständige gasisolierte und metallgekapselte Neutralpunktvorrichtungsanordnung nach Anspruch 1, wobei ein Ende des Zwischenzylinders (51) nahe dem Drahteinlasszylinder (4) mit einer drahteinlassseitigen Isoliervertiefung (91) zum Isolieren des Zwischenzylinders (51) vom Drahteinlasszylinder (4) versehen ist.

3. Vollständige gasisolierte und metallgekapselte Neutralpunktvorrichtungsanordnung nach Anspruch 2, wobei die Verzweigungsleitungsstruktur durch eine Kreuzverbindung (10) gebildet ist, ein Ende der Kreuzverbindung (10) an der drahteinlassseitigen Isoliervertiefung (91) fixiert ist und die anderen drei Enden mit steckbaren Leiterstrukturen versehen sind.

4. Vollständige gasisolierte und metallgekapselte Neutralpunktvorrichtungsanordnung nach Anspruch 3, wobei die Kreuzverbindung (10) mit einer Blindbohrung (11) versehen ist, die entlang einer axialen Richtung der drahteinlassseitigen Isoliervertiefung (91) verläuft und eine Bodenwand der Blindbohrung (11) durch Schrauben an der drahteinlassseitigen Isoliervertiefung (91) fixiert ist.

5. Vollständige gasisolierte und metallgekapselte Neutralpunktvorrichtungsanordnung nach einem der Ansprüche 2 bis 4, wobei ein Ende des Zwischenzylinders (51) nahe dem adaptiven Zylinder (61) mit einer adaptivseitigen Isoliervertiefung (92) zum Isolieren des Zwischenzylinders (51) vom adaptiven Zylinder (61) versehen ist.

6. Vollständige gasisolierte und metallgekapselte Neutralpunktvorrichtungsanordnung nach einem der Ansprüche 2 bis 4, wobei eine schalterseitige Isoliervertiefung (93) zwischen dem adaptiven Zylinder (61) und dem Trennschalter (3) vorgesehen ist und die schalterseitige Isoliervertiefung (93) zum Isolieren des adaptiven Zylinders (61) und des Trennschalters (3) dient.

7. Vollständige gasisolierte und metallgekapselte Neutralpunktvorrichtungsanordnung nach einem der Ansprüche 1 bis 4, wobei die vollständige gasisolierte und metallgekapselte Neutralpunktvorrichtungsanordnung einen Nullstromwandler (17) umfasst, der auf der Erdungsseite (72) der Entladungsstrecke (70) ummantelt ist.

8. Vollständige gasisolierte und metallgekapselte Neutralpunktvorrichtungsanordnung nach einem der Ansprüche 1 bis 4, wobei der Drahteinlassanschluss, der auf dem Drahteinlasszylinder (4) oder auf der Neutralpunktverbindungsseite (71) der Entladungsstrecke (70) vorgesehen ist, ein Neutralpunktleitungsanschluss (8) ist, der an einem oberen Ende der Neutralpunktverbindungsseite (71) der Entladungsstrecke (70) vorgesehen ist, und der Neutralpunktleitungsanschluss (8) zur elektrischen Verbindung einer Neutralpunktleitung dient.

9. Vollständige gasisolierte und metallgekapselte Neutralpunktvorrichtungsanordnung nach einem der Ansprüche 1 bis 4, wobei der auf dem Drahteinlasszylinder (4) vorgesehene Drahteinlassanschluss ein steckbarer Kabelanschluss (12) ist.

## Revendications

1. Ensemble complet de dispositif de point neutre à isolement gazeux et enveloppe métallique, comprenant un parafoudre (2), un interrupteur d'isolement (3) et un espace de décharge (70) ; l'espace de décharge (70) comprend un côté de connexion au point neutre (71) pour la conduction avec un point neutre d'un transformateur (14), et un côté de masse (72) pour la mise à la masse ; dans lequel :
le parafoudre (2) et l'interrupteur d'isolement (3) sont tous deux des structures fermées chacune avec une borne conductrice supérieure prévue en haut et une borne de masse prévue en bas ;
un du parafoudre (2) et de l'interrupteur d'isolement (3) est pourvu d'un cylindre d'entrée de fil métallique (4) en haut, l'autre est pourvu d'un cylindre adaptatif (61), et un cylindre intermédiaire (51) est prévu entre le cylindre d'entrée de fil métallique (4) et le cylindre adaptatif (61) ;
un conducteur intermédiaire (52) est prévu dans le cylindre intermédiaire (51), un conducteur adaptatif (62) est prévu dans le cylindre adaptatif (61), et le conducteur intermédiaire (52) est connecté à travers le conducteur adaptatif (62) au parafoudre (2) ou à une borne conductrice supérieure sur l'interrupteur d'isolement (3) ;
dans lequel le côté de connexion au point neutre (71) de l'espace de décharge (70) est fixé en haut du cylindre d'entrée de fil métallique (4), le côté de masse (72) de l'espace de décharge (70) est connecté électriquement au cylindre adaptatif (61) ou est pourvu d'une extrémité de connexion à la masse,
une structure conductrice de dérivation est prévue dans le cylindre d'entrée de fil métallique (4), et la structure conductrice de dérivation est simultanément conductrice avec le parafoudre (2) sous le cylindre d'entrée de fil métallique (4) ou la borne conductrice supérieure sur l'interrupteur d'isolement (3), et une extrémité correspondante du conducteur intermédiaire (52) et un côté de connexion neutre du parafoudre (2) ;
**caractérisé en ce que**
le cylindre d'entrée de fil métallique (4) est également pourvu d'une borne d'entrée de fil métallique pour la conduction avec la structure conductrice de dérivation, et une borne d'entrée de fil métallique pour la conduction avec le point neutre du transformateur (14) est prévue sur le côté de connexion au point neutre (71) de l'espace de décharge (70), le parafoudre (2) et l'interrupteur d'isolement (3) sont agencés verticalement, et le côté de connexion au point neutre (71) et le côté de masse (72) de l'espace de décharge (70) sont exposés à l'air.

2. Ensemble complet de dispositif de point neutre à isolement gazeux et enveloppe métallique selon la revendication 1, dans lequel une extrémité du cylindre intermédiaire (51) proche du cylindre d'entrée de fil métallique (4) est pourvue d'une cuvette isolante côté entrée de fil métallique (91) pour isoler le cylindre intermédiaire (51) du cylindre d'entrée de fil métallique (4).

3. Ensemble complet de dispositif de point neutre à isolement gazeux et enveloppe métallique selon la revendication 2, dans lequel la structure conductrice de dérivation est formée d'un joint croisé (10), une extrémité du joint croisé (10) est fixée à la cuvette isolante côté entrée de fil métallique (91), et les trois autres extrémités sont pourvues de structures conductrices enfichables.

4. Ensemble complet de dispositif de point neutre à isolement gazeux et enveloppe métallique selon la revendication 3, dans lequel le joint croisé (10) est pourvu d'un trou borgne (11) s'étendant le long d'une direction axiale de la cuvette isolante côté entrée de fil métallique (91), et une paroi inférieure du trou borgne (11) est fixée sur la cuvette isolante côté entrée de fil métallique (91) par des vis.

5. Ensemble complet de dispositif de point neutre à isolement gazeux et enveloppe métallique selon l'une quelconque des revendications 2 à 4, dans lequel une extrémité du cylindre intermédiaire (51) proche du cylindre adaptatif (61) est pourvue d'une cuvette isolante côté adaptatif (92) pour isoler le cylindre intermédiaire (51) et le cylindre adaptatif (61).

6. Ensemble complet de dispositif de point neutre à isolement gazeux et enveloppe métallique selon l'une quelconque des revendications 2 à 4, dans lequel une cuvette isolante côté interrupteur (93) est prévue entre le cylindre adaptatif (61) et l'interrupteur d'isolement (3), et la cuvette isolante côté interrupteur (93) est destinée à isoler le cylindre adaptatif (61) et l'interrupteur d'isolement (3).

7. Ensemble complet de dispositif de point neutre à isolement gazeux et enveloppe métallique selon l'une quelconque des revendications 1 à 4, dans lequel l'ensemble complet de dispositif de point neutre à isolement gazeux et enveloppe métallique comprend un transducteur à courant homopolaire (17) manchonné sur le côté de masse (72) de l'espace de décharge (70).

8. Ensemble complet de dispositif de point neutre à isolement gazeux et enveloppe métallique selon l'une quelconque des revendications 1 à 4, dans lequel la borne d'entrée de fil métallique qui est prévue sur le cylindre d'entrée de fil métallique (4) ou sur le côté de connexion au point neutre (71) de l'espace de décharge (70) est une borne de sortie de point neutre (8) prévue à une extrémité supérieure du côté de connexion au point neutre (71) de l'espace de décharge (70), et la borne de sortie de point neutre (8) est destinée à la connexion électrique d'un fil de sortie de point neutre.

9. Ensemble complet de dispositif de point neutre à isolement gazeux et enveloppe métallique selon l'une quelconque des revendications 1 à 4, dans lequel la borne d'entrée de fil métallique prévue sur le cylindre d'entrée de fil métallique (4) est une borne de câble enfichable (12).
